(19) Europäisches Patentamt
European Patent Office
Office européen des brevets

(11) **EP 4 163 259 A1**

(12) **EUROPEAN PATENT APPLICATION**

(43) Date of publication:
**12.04.2023 Bulletin 2023/15**

(21) Application number: **22199854.5**

(22) Date of filing: **05.10.2022**

(51) International Patent Classification (IPC):
$C01G\ 53/00^{(2006.01)}$    $H01M\ 4/131^{(2010.01)}$
$H01M\ 4/525^{(2010.01)}$    $H01M\ 4/36^{(2006.01)}$
$H01M\ 4/485^{(2010.01)}$    $H01M\ 4/58^{(2006.01)}$

(52) Cooperative Patent Classification (CPC):
**C01G 53/00; C01G 53/006; C01G 53/42;**
**C01G 53/44; H01M 4/364; H01M 4/366;**
**H01M 4/485; H01M 4/525; H01M 4/5825;**
C01P 2002/52; C01P 2002/72; C01P 2004/32;
C01P 2004/50; C01P 2004/61; C01P 2004/84;

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **06.10.2021 KR 20210132107**

(71) Applicant: **ECOPRO BM CO., LTD.**
**Cheongju-si, Chungcheongbuk-do 28116 (KR)**

(72) Inventors:
• **MOON, Chae Won**
**28116 Cheongju-si, Chungcheongbuk-do (KR)**
• **PARK, Jung Bae**
**28116 Cheongju-si, Chungcheongbuk-do (KR)**
• **CHOI, Moon Ho**
**28116 Cheongju-si, Chungcheongbuk-do (KR)**
• **YU, Hyung Jong**
**28116 Cheongju-si, Chungcheongbuk-do (KR)**

(74) Representative: **BCKIP Part mbB**
**Siegfriedstraße 8**
**80803 München (DE)**

(54) **POSITIVE ELECTRODE ACTIVE MATERIAL AND LITHIUM SECONDARY BATTERY COMPRISING THE SAME**

(57) The present invention relates to a positive electrode active material with improved electrochemical properties and stability and a lithium secondary battery using a positive electrode comprising the same, wherein secondary particles formed by aggregation of a plurality of primary particles are provided as aggregates of primary particles in which a concentration gradient of the doping metal is formed from a grain boundary between the primary particles toward a center portion of the primary particle.

FIG. 1

(52) Cooperative Patent Classification (CPC): (Cont.)
C01P 2006/12; C01P 2006/80

**Description**

BACKGROUND

**1. Field of the Invention**

The present invention relates to a positive electrode active material with improved electrochemical properties and stability and a lithium secondary battery using a positive electrode comprising the same, wherein the secondary particles formed by aggregation of a plurality of primary particles are provided as aggregates of primary particles in which a concentration gradient of the doping metal is formed from a grain boundary between the primary particles toward a center portion of the primary particle.

**2. Discussion of Related Art**

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A lithium composite oxide is used as a positive electrode active material of the lithium secondary battery, and composite oxides such as $LiCoO_2$, $LiMn_2O_4$, $LiNiO_2$, $LiMnO_2$, etc. are being studied.

Among the positive electrode active materials, $LiCoO_2$ is most widely used due to excellent lifetime characteristics and charge/discharge efficiency, but it is expensive because of the limited resource of cobalt, which is used as a raw material, and thus has a disadvantage of limited price competitiveness.

Lithium manganese oxides such as $LiMnO_2$ and $LiMn_2O_4$ have advantages of excellent thermal safety and low costs, but also have problems of small capacity and poor high-temperature characteristics. In addition, while a $LiNiO_2$-based positive electrode active material exhibits a battery characteristic such as a high discharge capacity, due to cation mixing between Li and a transition metal, it is difficult to synthesize the $LiNiO_2$-based positive electrode active material, thereby causing a big problem in rate characteristics.

In addition, depending on the intensification of such cation mixing, a large amount of Li by-products is generated, and since most of the Li by-products consist of compounds of LiOH and $Li_2CO_3$, they become a cause of gelation in preparation of a positive electrode paste and gas generation according to charge/discharge progression after the preparation of an electrode. Residual $Li_2CO_3$ increases the swelling phenomenon of a cell and thus reduces cycles and also leads to the swelling of a battery.

To compensate for these shortcomings, as a positive electrode active material for a secondary battery, the demand for a high-Ni-type positive electrode active material having an Ni content of 50% or more has started to increase. However, such a high-Ni-type positive electrode active material exhibits high capacity characteristics, and as the Ni content in the positive electrode active material increases, there is a problem of causing structural instability due to Li/Ni cation mixing. The structural instability of the positive electrode active material may lead to rapid deterioration of a lithium secondary battery not only at high temperatures but also at room temperature.

Meanwhile, there are the related arts such as Korean Patent Publication No. 10-2014-0022681 (Patent Document 1) related to a positive electrode active material for a lithium secondary battery.

In Patent Document 1, it is disclosed that the doping metal represented by Me among the compounds represented by the following Chemical Formula 1 can improve the electrochemical properties of the positive electrode active material by forming a concentration gradient that decreases towards the center from the surface of the particles of positive electrode active materials.

[Chemical Formula 1]        $Li_{1+x}M_{1-k}Me_kO_2$

However, only the concentration gradient of the doping metal, which is limitedly present on the surface of the positive electrode active material (secondary particles), is insufficient to simultaneously improve the electrochemical properties and the structural stability of the positive electrode active material, particularly in the case of high-Ni type.

Therefore, there is a need to develop a positive electrode active material to compensate for the problems of the high-Ni type positive electrode active material.

**SUMMARY OF THE INVENTION**

As described above, in a positive electrode active material for a lithium secondary battery, a predetermined trade-off relationship may be established between some indices indicating electrochemical properties of the positive electrode active material and some indices indicating stability. Therefore, when the capacity characteristics of the positive electrode active material are excessively improved, there is a risk that, on the contrary, the structural stability of the particles constituting the positive electrode active material is deteriorated, and thus stable charging and discharging performance may not be exhibited.

Accordingly, an object of the present invention is to provide a positive electrode active material capable of resolving low structural stability while maintaining high electrochemical properties of a positive electrode active material for an existing lithium secondary battery, particularly a high-Ni type positive electrode active material.

Specifically, an object of the present invention is to provide a positive electrode active material with improved electrochemical properties and stability, wherein the secondary particles formed by aggregation of a plurality of primary particles are provided as aggregates of primary particles in which a concentration gradient of the doping metal is formed from a grain boundary between the primary particles toward a center portion of the primary particle.

Still another object of the present invention is to provide a lithium secondary battery using a positive electrode including a positive electrode active material as defined herein.

One aspect of the present invention provides a positive electrode active material including at least nickel, cobalt, and a doping metal and including a lithium composite oxide having a layered structure capable of intercalation/deintercalation of lithium.

The lithium composite oxide includes secondary particles, which are aggregates in which a plurality of primary particles are aggregated and a grain boundary are formed between adjacent primary particles, and the secondary particles are aggregates of primary particles exhibiting a concentration gradient in which the concentration of the doping metal has a (-) slope from the grain boundary between the primary particles toward the center portion of the primary particle.

Here, the primary particle may be represented by the following Chemical Formula 1.

$$[\text{Chemical Formula 1}] \qquad \text{Li}_a\text{Ni}_{1-(b+c+d+e)}\text{Co}_b\text{M1}_c\text{M2}_d\text{M3}_e\text{O}_f$$

wherein,

M1 is at least one selected from Mn and Al,
M2 and M3 are each independently selected from Al, Ba, B, Ce, Cr, Mg, Mn, Mo, Na, K, P, V, Sr, Ti, W, Nb and Zr,
M1 to M3 are different from each other,
and $0.90 \leq a \leq 1.15$, $0 \leq b \leq 0.15$, $0 \leq c \leq 0.10$, $0 \leq d \leq 0.025$, $0 \leq e \leq 0.025$, $1.0 \leq f \leq 2.0$.

In one embodiment, the secondary particle may be aggregates of primary particles exhibiting a concentration gradient in the form of a decrease in at least one concentration selected from M2 and M3 from the grain boundary between the primary particles toward the center portion of the primary particles.

In addition, a first concentration gradient section having a (-) slope and a second concentration gradient section having a (+) slope may be present in the concentration of the doping metal from the surface portion of the secondary particle toward the center portion of the secondary particle.

In addition, according to another aspect of the present invention, a positive electrode including a positive electrode active material as defined herein is provided.

In addition, according to another aspect of the present invention, a lithium secondary battery using the positive electrode as defined herein is provided.

In general, the high-Ni type positive electrode active material for realizing a high capacity of a lithium secondary battery has a problem that the stability is low, but the positive electrode active material according to the present invention can improve the low stability of the high-nickel type positive electrode active material and at the same time contribute to the exhibition of stable electrochemical characteristics by implementing the secondary particles constituting the positive electrode active material as an aggregate of primary particles exhibiting a concentration gradient in which the concentration of the doping metal has a (-) slope from the grain boundary between the primary particles toward the center portion of the primary particle.

Meanwhile, in the case of the high-Ni type positive electrode active material, a large amount of Li by-products such as LiOH and $\text{Li}_2\text{CO}_3$ are present on the surface as compared with a positive electrode active material having a relatively low Ni content, which can act as a cause of gelation in the production of a positive electrode paste using the positive electrode active material, or as a source of gas generation during charging and discharging of a lithium secondary battery.

However, it is possible to reduce the content of Li by-products inside/outside the positive electrode active material by allowing a concentration gradient to be formed not only on the surface of the secondary particles but also for the concentration of the doping metal from the grain boundaries between the primary particles constituting the secondary particles.

In addition, the positive electrode active material is not only the surface of the secondary particles, but also the grain boundary surface (i.e., grain boundary between the primary particles) in the secondary particle is a region where side reactions with the electrolyte may occur during charging and discharging and/or storage of the lithium secondary battery.

In this case, as the surface area of the positive electrode active material increases, the area of a region in which a side reaction may occur also increases, so that the possibility of a side reaction may increase. This side reaction may cause a phase transformation in which the crystal structure of the lithium composite oxide constituting the positive electrode active material is changed (e.g., layered structure → rock salt structure). Such a phase transformation of the crystal structure in the surface of the positive electrode active material is pointed out as one of the causes of reducing the electrochemical characteristics, such as the lifespan characteristics, of the lithium secondary battery.

The positive electrode active material according to the present invention can reduce the surface area where side reactions with the electrolyte can occur during charging and discharging of the lithium secondary battery by forming a concentration gradient with respect to the concentration of the doping metal from the grain boundary between the primary particles constituting the secondary particle as well as the surface of the secondary particles. Accordingly, charging/discharging and/or storage stability can be improved by reducing the possibility of a side reaction with the electrolyte during charging/discharging and/or storage of the lithium secondary battery.

As a result, the positive electrode active material according to the present invention includes secondary particles provided as aggregates of primary particles in which a concentration gradient of the doping metal is formed in a direction from the grain boundary between the primary particles toward the center portion of the primary particle, and thus can contribute to an improvement in various physical properties including the structural stability of the positive electrode active material, as well as electrochemical properties such as lifetime characteristics and efficiency properties.

In addition to the above-described effects, the specific effects of the present invention will be described together while describing specific details for carrying out the invention below.

BRIEF DESCRIPTION OF THE DRAWINGS

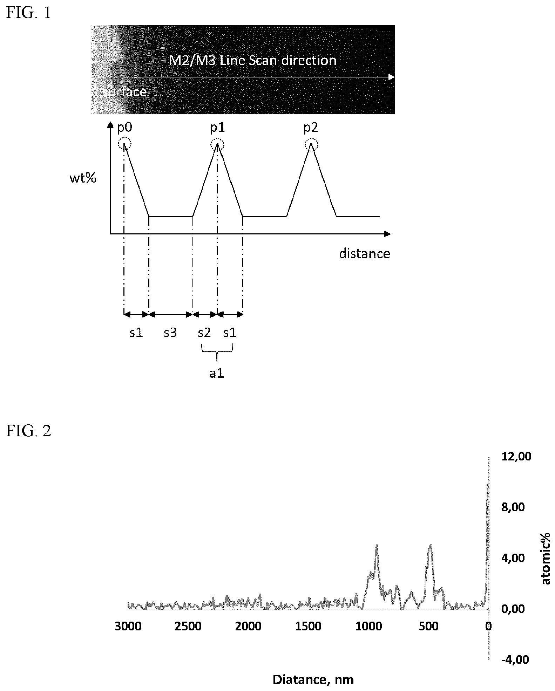

FIG. 1 is a graph schematically illustrating a concentration gradient of a secondary particle included in a positive electrode active material according to an embodiment of the present invention. The graph shown in FIG. 1 schematically shows an example of an EDX analysis result of line scanning from the surface portion of the secondary particle toward the center portion of the secondary particle with respect to the doping metal referred to as M2 and/or M3.

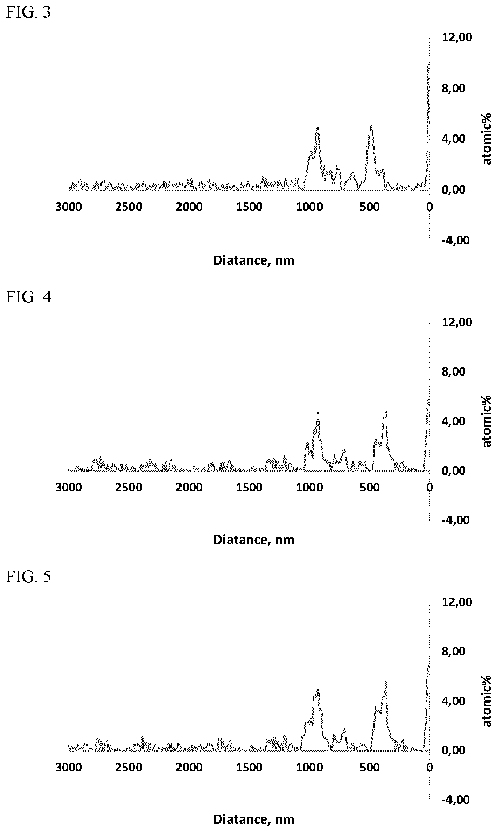

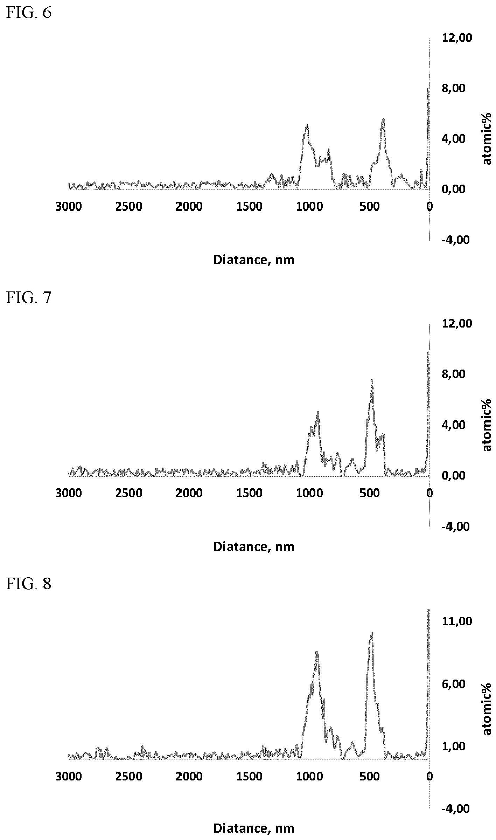

In addition, FIGS. 2 to 8 are graphs exhibiting the content of doping metal in the secondary particles determined by EDX analysis, i.e., line scanning, of a cross-sectional SEM image obtained after selecting secondary particles having a radius of 7.5 $\mu$m contained in the positive electrode active material according to Examples 1 to 7, respectively, and then performing cross-section treatment using a FIB (Ga-ion source).

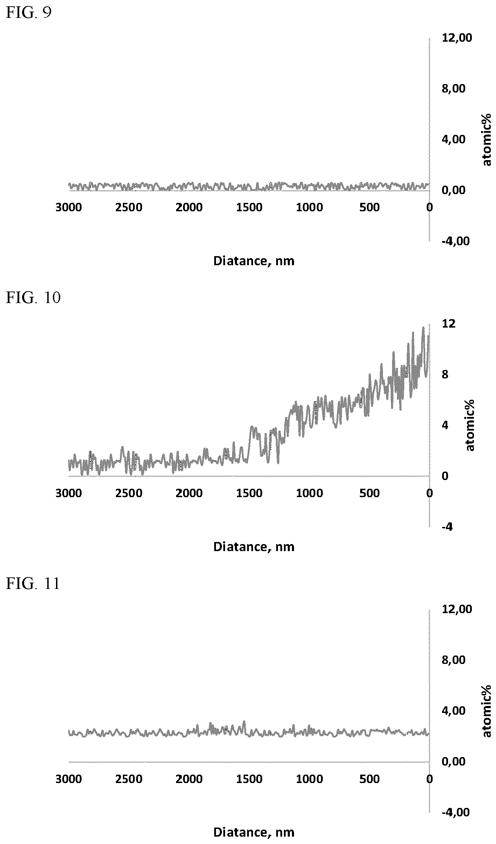

FIGS. 9 to 11 are graphs exhibiting the content of doping metal in the secondary particles determined by EDX analysis, i.e., line scanning, of a cross-sectional SEM image obtained after selecting secondary particles having a radius of 7.5 $\mu$m contained in the positive electrode active material according to Comparative Examples 1 to 3, respectively, and then performing cross-section treatment using a FIB (Ga-ion source).

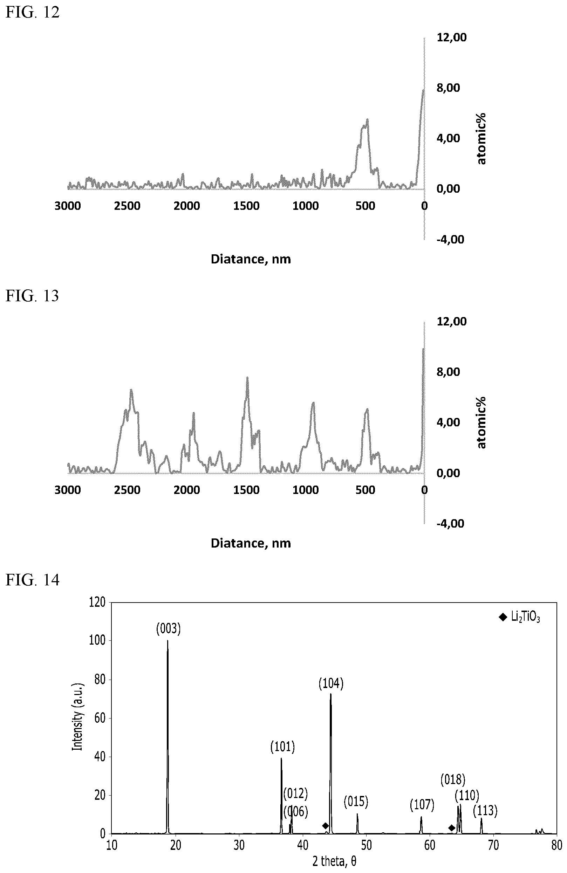

FIGS. 12 and 13 are graphs exhibiting the content of doping metal in the secondary particles determined by EDX analysis, i.e., line scanning, of a cross-sectional SEM image obtained after selecting secondary particles having a radius of 7.5 $\mu$m contained in the positive electrode active material according to Reference Example 1 and Reference Example 2, respectively, and then performing cross-section treatment using a FIB (Ga-ion source).

Here, FIGS. 2 to 13 are excerpts of line scanning results from the surface portion of the secondary particle included in each positive electrode active material to a depth of 3 $\mu$m (3,000 nm).

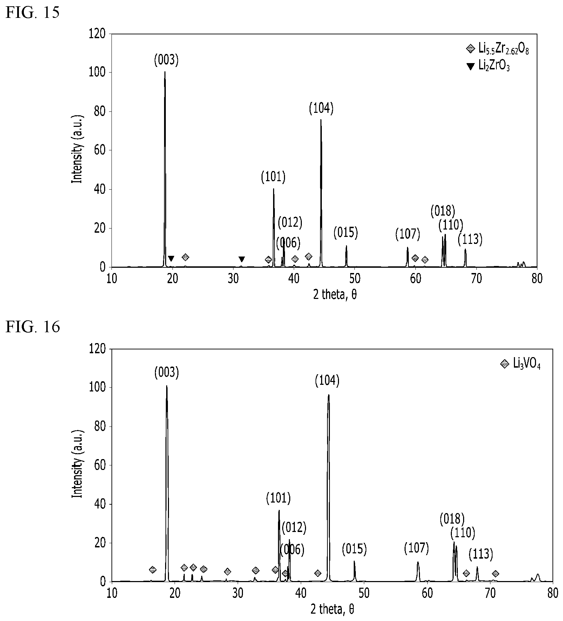

FIGS. 14 to 16 show XRD analysis results of the positive electrode active materials according to Examples 1 to 3, respectively.

DETAILED DESCRIPTION OF EXEMPLARY EMBODIMENTS

In order to better understand the present invention, certain terms are defined herein for convenience. Unless defined otherwise herein, scientific and technical terms used herein shall have the meanings commonly understood by one of ordinary skill in the art. Also, unless the context specifically dictates otherwise, it is to be understood that a term in the singular includes its plural form as well, and a term in the plural form also includes its singular form.

Hereinafter, the positive electrode active material according to the present invention and the lithium secondary battery using the positive electrode including the positive electrode active material will be described in more detail.

Positive electrode active material

One aspect of the present invention provides a positive electrode active material including a lithium composite oxide having a layered structure capable of intercalation/deintercalation of lithium.

The lithium composite oxide includes secondary particles, which are aggregates in which a plurality of primary particles are aggregated and a grain boundary is formed between adjacent primary particles.

Here, the primary particle means one grain or crystallite, and the secondary particle means an aggregate formed by aggregation of a plurality of primary particles, and the secondary particle may be referred to as bulk particles. In addition, the primary particle may be rod-shaped, oval-shaped and/or circular-shaped or irregular.

A void and/or a grain boundary may be present between the primary particles constituting the secondary particle. For example, the primary particle may be spaced apart from neighboring primary particles in the interior of the secondary particle to form internal voids. In addition, the primary particle may form a surface present inside the secondary particle by contacting the internal voids without forming a grain boundary by contacting neighboring primary particle.

Meanwhile, the surface on which the primary particle present on the outermost surface of the secondary particles are exposed to external air forms the surface of the secondary particle.

Here, the average particle diameter of the primary particles is in the range of 0.1 $\mu$m to 10 $\mu$m, preferably 0.1 $\mu$m to 5 $\mu$m, thereby implementing the optimal density of the positive electrode manufactured using the positive electrode active material according to various embodiments of the present invention. In addition, the average particle diameter of the secondary particle may vary depending on the number of aggregated primary particles, but may be 3 $\mu$m to 20 $\mu$m.

In addition, the lithium composite oxide may include at least nickel, cobalt, and a doping metal. When the lithium composite oxide further includes manganese other than nickel, cobalt, and a doping metal, the lithium composite oxide may be an NCM type composite oxide. In addition, when the lithium composite oxide further includes aluminum other than cobalt and a doping metal, the lithium composite oxide may be an NCA type composite oxide.

As described above, the secondary particles constituting the lithium composite oxide are aggregates formed by aggregation of a plurality of primary particles. In this case, a boundary surface between adjacent primary particles or a bonding surface of adjacent primary particles may be defined as a grain boundary between primary particles. Also, a grain boundary between adjacent primary particles may coincide with the surface of the primary particle constituting the grain boundary.

Here, the primary particles constituting the secondary particles may exhibit a concentration gradient in which the concentration of the doping metal has a (-) slope from the grain boundary between the primary particles toward the center portion of the primary particle.

The change in the concentration of the doping metal in the primary particles formed in the direction from the surface portion of the secondary particles towards the center portion of the secondary particles can be measured via EDX line scanning of the cross section of the secondary particles.

When the secondary particles are aggregates of primary particles exhibiting a concentration gradient in which the concentration of the doping metal has a (-) slope from the grain boundary between the primary particles toward the center portion of the primary particle, the EDX analysis results for the secondary particles can confirm that the pattern of the concentration gradient for the doping metal is repeated.

For example, when line scanning is performed in the direction from the surface portion of the secondary particle toward the center portion of secondary particle with respect to a primary particle present on the outermost surface of secondary particles, a concentration gradient can be shown in which the concentration of the doping metal in the primary particle from the surface portion of the secondary particle toward the center portion of the primary particle has a (-) slope, and in the same primary particle, a concentration gradient can be shown in which the concentration of the doping metal in the same primary particle from the center portion of the primary particle toward the center portion of the secondary particle has a (+) slope. Even in this case, based on the primary particles, the concentration of the doping metal in a single primary particle exhibits a concentration gradient having a (-) slope from a surface portion of the primary particle (wherein the surface portion thereof means a grain boundary between adjacent of primary particles) toward a center portion of the primary particle.

Meanwhile, as the concentration gradient in which the concentration of the doping metal has a (-) slope from the grain boundary between the primary particles toward the center portion of the primary particle is shown, a first concentration gradient section having a (-) slope and a second concentration gradient section having a positive slope are present from the surface portion of each secondary particle to the center portion of the secondary particle, based on the secondary particles. In addition, a first concentration gradient section having a (-) slope and a second concentration gradient section having a (+) slope may repeatedly be present in the concentration of the doping metal from the surface portion of the secondary particle toward the center portion of the secondary particle.

Herein, the ordinal number used in referring to a concentration gradient section having a (+) slope and/or (-) is only used to distinguish between a concentration gradient section having a slope of (-) and a concentration gradient section having a (+) slope.

In addition, exhibiting a concentration gradient having a (+) slope means that the concentration of the doping metal significantly increases between the starting point and the ending point of line scanning. In addition, exhibiting a concentration gradient having a (-) slope means that the concentration of the doping metal significantly decreases between the starting point and the ending point of line scanning. For example, significantly increasing or decreasing the concentration of the doping metal means that the amount of change in the concentration of the doping metal between the starting point and the ending point of the concentration gradient section is 2 at% or more.

The indication of a concentration gradient having a (+) slope is attributed to the (+) slope for the concentration of the doping metal between the starting point and the ending point of the line scanning, and a change in the slope according to a difference in the concentration of the doping metal in a partial section between the starting point ending end point of the line scanning is not taken into account.

Likewise, it should be understood that exhibiting a concentration gradient having a (-) slope means that a gradient with respect to the concentration of the doping metal between the starting point and ending point of line scanning is (-). Accordingly, a slope change according to a difference in the concentration of the doping metal in a partial section between the starting point and the ending point of line scanning is not taken into account.

The primary particle constituting the secondary particle as defined herein may be represented by Chemical Formula 1 below.

$$[\text{Chemical Formula 1}] \qquad \text{Li}_a\text{Ni}_{1-(b+c+d+e)}\text{Co}_b\text{M1}_c\text{M2}_d\text{M3}_e\text{O}_f$$

wherein,

M1 is at least one selected from Mn and Al,
M2 and M3 are each independently selected from Al, Ba, B, Ce, Cr, Mg, Mn, Mo, Na, K, P, V, Sr, Ti, W, Nb and Zr,
M1 to M3 are different from each other,
and $0.90 \leq a \leq 1.15$, $0 \leq b \leq 0.15$, $0 \leq c \leq 0.10$, $0 \leq d \leq 0.025$, $0 \leq e \leq 0.025$, $1.0 \leq f \leq 2.0$.

The primary particle may be a high-Ni type lithium composite oxide in which concentrations (mol%) of Ni, Co, M1, M2 and M3 in Chemical Formula 1 satisfy Equation 1 below.

$$[\text{Equation 1}]$$
$$\text{Ni}/(\text{Ni}+\text{Co}+\text{M1}+\text{M2}+\text{M3}) \geq 80.0$$

In addition, the lithium composite oxide may be a high-Ni/low Co type lithium composite oxide satisfying Equation 1 (the concentration (mol%) of Ni, Co, M1, M2, and B), and having the content of Co is 10 mol% or less, preferably 5 mol% or less.

In this case, the lithium composite oxide may satisfy Equation 2 below.

$$[\text{Equation 2}]$$
$$\text{Co}/(\text{Ni}+\text{Co}+\text{M1}+\text{M2}+\text{M3}) \leq 5.0$$

In general, in a lithium composite oxide including at least Ni and Co, it is known that as the content of Ni increases, structural instability of the lithium composite oxide may be caused by Li/Ni cation mixing. In addition, in the lithium composite oxide including at least Ni and Co, it is reported that as the content of Co decreases, the initial overvoltage (resistance) increases, and accordingly, a decrease in rate characteristics is unavoidable.

However, the lithium composite oxide included in the positive electrode active material according to one embodiment of the present invention exhibits a concentration gradient in which the concentration of the doping metal has a (-) slope from the grain boundary between the primary particles constituting the secondary particles toward the center portion of the primary particle, and thus can mitigate and/or prevent a reduction in the structural instability and rate characteristics of the high-Ni type or high-nickel/low-Co type lithium composite oxide.

Meanwhile, M2 and/or M3 in Chemical Formula 1 may correspond to the above-described doping metal. Accordingly, the secondary particle may be aggregates of primary particles exhibiting a concentration gradient in which at least one concentration selected from M2 and M3 decreases from the grain boundary between the adjacent primary particles toward the center portion of the primary particle.

FIG. 1 is a graph schematically illustrating a concentration gradient of a secondary particle included in a positive electrode active material according to an embodiment of the present invention. The graph shown in FIG. 1 schematically shows an example of an EDX analysis result of line scanning from the surface portion of the secondary particle toward the center portion of the secondary particle with respect to the doping metal referred to as M2 and/or M3.

Referring to FIG. 1, when viewed with respect to the secondary particle, the concentration of the doping metal may have a (-) slope in a direction from the outermost surface of the secondary particle toward the center portion of the secondary particle. At this time, a section in which the concentration gradient having the above-described (-) slope appears is referred to as a first concentration gradient section s1.

As such, as the concentration of the doping metal has a (-) slope from the outermost surface of the secondary particle toward the center portion of the secondary particle, a first peak (p0) with respect to the concentration of the doping metal may appear at a position corresponding to the outermost surface of the secondary particle in the graph.

The average particle diameter of the primary particle is r, the concentration gradient in the primary particle may be present within a depth of 0.2r from a grain boundary between the primary particles. When the concentration gradient in the primary particle is present to a depth exceeding 0.2r from the grain boundary between the primary particles, there is a risk of causing instability of the crystal structure in the primary particle or reducing the electrochemical properties.

Meanwhile, after the first concentration gradient section s1, a concentration maintenance section s3 in which the concentration of the doping metal is maintained as much as a predetermined depth may be present.

The concentration maintenance section not only means a section in which the concentration of the doping metal does not change significantly and is almost uniform, but also refers to a section in which the absolute value of the concentration change of the doping metal is 3 at%, preferably 2 at% or less. The absolute value of the amount of change in concentration of the doping metal in the concentration maintenance section may vary depending on the type of doping metal and the content of doping metals in the primary particles, etc., but the concentration change of the doping metals within the concentration maintenance section is insignificant compared to the first concentration gradient section s1 and a second concentration gradient section s2.

The concentration of the doping metal may have a (+) slope toward the center portion of the secondary particle inside the concentration maintenance section. At this time, a section in which the concentration gradient having the above-described (+) slope appears is referred to as a second concentration gradient section s2.

As shown in FIG. 1, when describing the secondary particle as a reference, it can be confirmed that the first concentration gradient section s1, the concentration maintenance section s3 and the second concentration gradient section s2 are repeatedly present from the surface portion of the secondary particle toward the center portion of the secondary particle. However, even in this case, it can be understood that the second concentration gradient section s2 appears through a concentration gradient having a (-) slope from the grain boundary between the primary particles toward the center portion of the primary particle.

That is, only when the secondary particles are aggregates of primary particles exhibiting a concentration gradient in which the concentration of the doping metal has a (-) slope from the grain boundary between the primary particles toward the center portion of the primary particle, a first concentration gradient section having a (-) slope and a second concentration gradient section having a (+) slope may repeatedly be present in the concentration of the doping metal from the surface portion of the secondary particle toward the center portion of the secondary particle.

Meanwhile, at least one peak p1, p2 can appear after the first peak p0 with respect to the concentration of the doping metal at a position corresponding to the outermost surface of the secondary particle, as there are repeatedly a first concentration gradient section in which a concentration of the doping metal has a (-) slope and a second concentration gradient section in which the concentration thereof has a (+) slope from the surface portion of the secondary particle toward the center portion of the secondary particle.

The second peak p1 first appearing after the first peak p0 may appear as the first concentration gradient section s1 is present after the second concentration gradient section s2. At this time, the second peak p1 may be formed by the first concentration gradient section s1 present in the primary particles present at the outermost surface of the secondary particles and the second concentration gradient section s2 present in primary particles adjacent to the primary particle. At this time, the first concentration gradient section s1 present in the primary particles present on the outermost surface of the secondary particles and the second concentration gradient section s2 present in primary particles adjacent to the primary particle may be collectively defined as a peak region a1, and a peak present in the peak area a1 may be defined as the second peak p1. In this case, a position where the second peak p1 appears may be a grain boundary formed between two adjacent primary particles.

Stability on the surface of the secondary particle may be improved by the first concentration gradient section s1 being present after the first peak p0 appearing on the surface of the secondary particle. For example, by the presence of the first concentration gradient section s1 for the doping metal in the surface portion of the secondary particles, the content of Li by-products in the surfaces of secondary particles can be reduced, or the specific surface area of these secondary particles is reduced, thereby reducing the possibility of side reactions with electrolytes.

Meanwhile, as the primary particles exhibit a concentration gradient in which the concentration of the doping metal has a (-) slope from the grain boundary between the primary particles toward the center portion of the primary particle, the first concentration gradient section s1, the concentration maintenance section s3, and the second concentration gradient section s2 are sequentially present in the secondary particles from the central part of the secondary particle toward the surface portion of a secondary particle. In this way, the structural stability of the primary particles can be improved by the first concentration gradient section s1, the concentration maintenance section s3, and the second concentration gradient section s2 being sequentially present from the center portion of the secondary particles in the primary particles toward the surface portion of the secondary particles.

In addition, by means of the concentration gradient pattern of the doping metal described above, it is possible to reduce the content of Li by-products at the grain boundaries between the primary particles as well as at the surface of the secondary particles, and reduce the exposed area inside the secondary particle, thereby reducing the possibility of side reactions with the electrolyte.

Meanwhile, there are a first concentration gradient section s1 in which the concentration of the doping metal has a (-) slope from the surface portion of the secondary particle toward the center portion of the secondary particle and a second concentration gradient section s2 in which the slope is (+), but it is preferred that the first and second concentration gradient sections are repeatedly present at least twice. In this case, the concentration maintenance section s3 may be present between at least the first concentration gradient section s1 and the second concentration gradient section s2 present in the same primary particle.

As the first concentration gradient section s1 and the second concentration gradient section s2 are repeated from the surface portion of the secondary particle toward the center portion of a secondary particle, a peak region is repeatedly formed along the depth direction from a surface portion thereof.

In addition, the peak region may be present not only in a position adjacent to the surface of the secondary particle, but also in a position adjacent to the center portion of the secondary particle or a center portion of the secondary particle. However, in order to allow the peak region to be present up to the center portion of the secondary particle depending on the type of doping metal, there may be a case where the content of the raw material containing a doping metal introduced during the step of synthesizing the positive electrode active material should be excessively increased. When the content of the raw material containing the doping metal to be introduced during the step of synthesizing the positive electrode active material becomes excessively high, there is a risk that the content thereof in the primary particles becomes unnecessarily high, or the content of the doping metal-derived compound present in at least a part of the crystal grain boundary between the primary particles and the surface of the secondary particle becomes excessively large, which rather lowers the electrochemical characteristics and the stability of the positive electrode active material.

Therefore, preferably, the first concentration gradient section s1 and the second concentration gradient section s2 are repeatedly present at least twice or more from the surface portion of the secondary particle toward the center portion of the secondary particle, and the upper limit of the number of times the first and second concentration gradient sections s1 and s2 are repeated can be appropriately adjusted in consideration of the composition of the positive electrode active material and the type of doping metal.

For example, when the radius of the secondary particles is referred to as R, it may be advantageous in terms of the electrochemical properties and stability of the positive electrode active material when the first concentration gradient section s1 and the second concentration gradient section s2 are limited to being present within a depth of 0 to 0.2 R from the surface portion of the secondary particles.

When the first concentration gradient section s1 and the second concentration gradient section s2 are generally present from the surface portion to the center portion of the secondary particle, it is preferable that the number of times of repeating the first concentration gradient section s1 and second concentration gradient section s2 (or the number at which the peaks p1, p2, etc. are present, the number at which the peak regions a1, etc. are present) which are present within a depth of 0 to 0.2 R from a surface portion of a secondary particle is larger than the number of times of repeating the first concentration gradient section s1 and second concentration gradient section s2 (or the number at which the peaks p1, p2, etc. are present, the number at which the peak regions a1, etc. are present) which are present within a depth of 0.2R to R from a surface portion of a secondary particle.

In addition, a positive electrode active material according to some embodiments of the present invention may include a coating layer covering at least the surface portion of the primary particles (e.g., grain boundaries between the primary particles) and/or secondary particles formed by agglomeration of primary particles.

For example, the coating layer may be present to cover at least a portion of the exposed surface of the primary particle. In particular, the coating layer may be present to cover at least a portion of the exposed surface of the primary particle present in the outermost portion of the secondary particle.

Accordingly, the coating layer may be present as a layer for continuously or discontinuously coating the surface of the primary particle and/or the secondary particle formed by agglomeration of the primary particles. When the coating layer is discontinuous, it may be present in the form of an island.

The present coating layer may contribute to resolving low structural stability while maintaining high electrochemical properties of the positive electrode active material, particularly, the high-Ni type positive electrode active material.

In addition, the coating layer may be present in the form of a solid solution that does not form a boundary with the primary particle and/or the secondary particle formed by agglomeration of the primary particles.

The coating layer may include at least one compound represented by Chemical Formula 2 below. That is, the coating layer may be defined as a region in which the compound represented by the following Chemical Formula 2 is present.

$$[\text{Chemical Formula 2}] \qquad Li_gM4_hO_i$$

wherein,

M4 is at least one selected from Mn, Al, Co, Ti, Zr, Sr, Mg, V, B, Mo, Zn, Nb, Ba, Ca, Ta, Fe, Cr, Sn, Hf, Ce and W; and $0 \leq g \leq 10$, $0 < h \leq 8$, $0 < i \leq 15$.

In addition, the coating layer may be in a form in which heterogeneous compounds are simultaneously present in one layer, or in which heterogeneous compounds represented by Chemical Formula 2 are present in separate layers.

The compound represented by Chemical Formula 2 may be physically and/or chemically bound to the primary particle represented by Chemical Formula 1 above. In addition, the compound may be present in the form of a solid solution formed with the primary particles represented by Chemical Formula 1 above.

The positive electrode active material according to the present embodiment may have increased structural stability by including a coating layer covering at least a portion of the primary particles (e.g., the interface between primary particles) and/or the surface of the secondary particles formed by agglomeration of primary particles. In addition, when such a positive electrode active material is used in a lithium secondary battery, high-temperature storage stability and lifespan characteristics of the positive electrode active material may be improved. In addition, the compound may affect the efficiency characteristics of the lithium secondary battery by reducing residual lithium in the positive electrode active material and simultaneously acting as a lithium ion migration pathway.

In addition, in some cases, the compound may be present not only in at least a portion of the interface between the primary particles and the surface of the secondary particle, but also in internal pores formed inside the secondary particle.

The compound may be a compound in which lithium and an element represented by M4 are complexed, or a compound of M4, wherein the compound may be expressed as, for example, $Li_aW_bO_c$, $Li_aZr_bO_c$, $Li_aTi_bO_c$, $Li_aNi_bO_c$, $Li_aB_bO_c$, $W_bO_c$, $Zr_bO_c$, $Ti_bO_c$ or $B_bO_c$. Further, nonlimiting examples of the compound include $Li_2B_4O_7$, $Li_3BO_3$, $Li_2B_2O_7$, $Li_2B_8O_{13}$, $Li_2VO_3$, $Li_3VO_4$, $Li_6Zr_3O_9$, $Li_2ZrO_3$, $Li_{5.5}Zr_{2.6}2O_8$, $Li_{44}Ba_{19}$, $Li_4Ba$, $Li_2TiO_3$, $LiTi_7O_4$ and $LiTi_2O_4$. The above-described examples are merely described for convenience of understanding, and the compounds defined herein are not limited to the above-described examples.

In another embodiment, the compound may further include a compound in which lithium and at least two elements represented by M4 are complexed. The compound in which lithium and at least two elements represented by M4 are complexed may be, for example, $Li_a(W/Ti)_bO_c$, $Li_a(W/Zr)_bOc$, $Li_a(W/Ti/Zr)_bO_c$, $Li_a(W/Ti/B)_bO_c$, etc., but is not necessarily limited thereto.

Here, the compound may exhibit a concentration gradient that decreases from the surface portion of the secondary particle toward the center portion of the secondary particle. Accordingly, the concentration of the compound may decrease from the surface portion of the secondary particle toward the center portion of the secondary particle.

As described above, when the compound exhibits a concentration gradient that decreases from the surface portion of the secondary particle toward the center portion thereof, the residual lithium present on the surface of the positive electrode active material can be effectively reduced to prevent side reactions caused by unreacted residual lithium. Specifically, by reacting the residual lithium present in the surface portion of the secondary particle with the raw material of the compound represented by Chemical Formula 2 to form the compound represented by Chemical Formula 2, it is possible to reduce the amount of the residual lithium present on the surface portion of the secondary particle. In addition, it is possible to prevent crystallinity from being lowered in the region inside the surface of the positive electrode active material by the compound. In addition, it is possible to prevent the collapse of overall structure of the positive electrode active material by the compound during the electrochemical reaction.

Additionally, the coating layer includes a first coating layer including at least one compound represented by Chemical Formula 2 and a second coating layer including at least one compound represented by Chemical Formula 2, wherein the compound is different from the compound included in the first coating layer.

For example, the first coating layer may be present to cover at least a portion of the exposed surface of the primary particle present in the outermost portion of the secondary particle, and the second coating layer may be present to cover at least a portion of the exposed surface of the primary particles that are not covered by the first coating layer and the surface of the first coating layer.

## Lithium secondary battery

Another aspect of the present invention may provide a positive electrode including a positive electrode current collector and a positive electrode active material layer formed on the positive electrode current collector. Here, the positive electrode active material layer may include positive electrode active materials according to various embodiments of the present invention. Therefore, since the positive electrode active material is the same as described above, detailed description thereof will be omitted for convenience, and hereinafter, other components that have not been described will be described.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 μm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator film and an electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator film, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiOp ($0<\beta<2$), $SnO_2$, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

In addition, in another exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator film is not particularly limited as long as it is generally used in a lithium secondary battery to separate a negative electrode from a positive electrode and provide a diffusion path for lithium ions, and particularly, the separator film has a low resistance to ion mobility of an electrolyte and an excellent electrolyte solution impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator film including a ceramic component or a polymer material may be used to ensure thermal resistance or mechanical strength, and may be optionally used in a single- or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifespan characteristics, it is useful in portable devices such as a mobile phone, a notebook computer and a digital camera and an electric automobile field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to yet another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to explain the present invention, and it will not be interpreted that the scope of the present invention is limited by the examples below

**Preparation Example 1. Preparation of positive electrode active material**

Example 1

A spherical $Ni_{0.92}Co_{0.066}Mn_{0.02}(OH)_2$ hydroxide precursor was synthesized by a coprecipitation method.

Specifically, 25 wt% of NaOH and 30 wt% of $NH_4OH$ were added to a 1.5M complex transition metal sulfuric acid aqueous solution in which nickel sulfate, cobalt sulfate and manganese sulfate were mixed in a molar ratio of 92:6:2 in a 90 L reactor. The pH in the reactor was maintained at 11.5, and the reactor temperature was maintained at 60°C. In addition, $N_2$, which is an inert gas, was input into the reactor to prevent oxidation of the prepared precursor.

After completion of the synthesis of the hydroxide precursor, it was washed and dehydrated using filter press (F/P) equipment to obtain a $Ni_{0.92}Co_{0.066}Mn_{0.02}(OH)_2$ hydroxide precursor.

After mixing the obtained hydroxide precursor and LiOH (Li/(Ni+Co+Mn) mol ratio = 1.05), the temperature was raised 2°C per minute to 700°C while maintaining an $O_2$ atmosphere in a furnace, and then heat-treated at 700°C for 10 hours (first heat treatment) to obtain a lithium composite oxide.

Then, without washing the obtained lithium composite oxide with water, $TiO_2$ weighed to 0.05 mol% was mixed with the lithium composite oxide, and then the temperature was raised to 700°C at 2°C per minute while maintaining an $O_2$ atmosphere, and then additional heat treatment (second heat treatment) was performed at 700°C for 10 hours to finally obtain the positive electrode active material.

Example 2

A positive electrode active material was prepared in the same manner as in Example 1, except that during the second heat treatment for the lithium composite oxide, 0.05 mol% of $ZrO_2$ was mixed instead of $TiO_2$, and then the temperature was raised to 710°C at 2°C per minute while maintaining an $O_2$ atmosphere, and then additional heat treatment (second heat treatment) was performed at 710°C for 10 hours.

Example 3

A positive electrode active material was prepared in the same manner as in Example 1, except that during the second heat treatment for the lithium composite oxide, 0.1 mol% of $V_2O_3$ was mixed instead of $TiO_2$, and then the temperature was raised to 2°C per minute to 720°C while maintaining an $O_2$ atmosphere, and then additional heat treatment (second heat treatment) was performed at 720°C for 10 hours.

Example 4

A positive electrode active material was prepared in the same manner as in Example 1, except that during the second heat treatment for the lithium composite oxide, 0.2 mol% of $H_3BO_3$ was mixed instead of $TiO_2$, and then the temperature was raised to 720°C at 2°C per minute while maintaining an $O_2$ atmosphere, and then additional heat treatment (second heat treatment) was performed at 720°C for 10 hours.

Example 5

A positive electrode active material was prepared in the same manner as in Example 1, except that during the second heat treatment for the lithium composite oxide, 0.2 mol% of $WO_3$ was mixed instead of $TiO_2$, and then the temperature was raised to 700°C at 2°C per minute while maintaining an $O_2$ atmosphere, and then additional heat treatment (second heat treatment) was performed at 700°C for 10 hours.

Example 6

A positive electrode active material was prepared in the same manner as in Example 1, except that during the second heat treatment for the lithium composite oxide, 0.2 mol% of $Sr(OH)_2$ was mixed instead of $TiO_2$, and then the temperature was raised to 680°C at 2°C per minute while maintaining an $O_2$ atmosphere, and then additional heat treatment (second heat treatment) was performed at 680°C for 10 hours.

Example 7

A positive electrode active material was prepared in the same manner as in Example 1, except that during the second heat treatment for the lithium composite oxide, 0.2 mol% of $Al_2O_3$ was mixed instead of $TiO_2$, and then the temperature was raised to 700°C at 2°C per minute while maintaining an $O_2$ atmosphere, and then additional heat treatment (second heat treatment) was performed at 700°C for 10 hours.

Example 8

A spherical $Ni_{0.95}Co_{0.04}Mn_{0.01}(OH)_2$ hydroxide precursor was synthesized by the coprecipitation method.
Specifically, 25 wt% of NaOH and 30 wt% of $NH_4OH$ were added to a 1.5M complex transition metal sulfuric acid aqueous solution in which nickel sulfate, cobalt sulfate and manganese sulfate were mixed in a molar ratio of 95:4:1 in a 90 L reactor. The pH in the reactor was maintained at 11.5, and the reactor temperature was maintained at 60°C. In addition, $N_2$, which is an inert gas, was input into the reactor to prevent oxidation of the prepared precursor.
After completion of the synthesis of the hydroxide precursor, it was washed and dehydrated using filter press (F/P) equipment to obtain a $Ni_{0.95}Co_{0.04}Mn_{0.01}(OH)_2$ hydroxide precursor.
After mixing the obtained hydroxide precursor and LiOH (Li/(Ni+Co+Mn) mol ratio = 1.05), the temperature was raised to 700°C at 2°C per minute while maintaining an $O_2$ atmosphere in a furnace, and then heat-treated at 700°C for 10 hours (first heat treatment) to obtain a lithium composite oxide.
Then, without washing the obtained lithium composite oxide with water, $TiO_2$ weighed to 0.05 mol% is mixed with the lithium composite oxide, and then the temperature was raised to 700°C at 2°C per minute while maintaining an $O_2$ atmosphere, and then additional heat treatment (second heat treatment) was performed at 700°C for 10 hours to finally obtain the positive electrode active material.

Comparative Example 1

A positive electrode active material was prepared in the same manner as in Example 1, except that $TiO_2$ was not mixed during the second heat treatment of the lithium composite oxide.

Comparative Example 2

A positive electrode active material was prepared in the same manner as in Example 1, except that during the second heat treatment for the lithium composite oxide, 0.05 mol% of $ZrO_2$ was mixed instead of $TiO_2$, and then the temperature was raised to 850°C at 2°C per minute while maintaining an $O_2$ atmosphere, and then additional heat treatment (second heat treatment) was performed at 850°C for 24 hours.

Comparative Example 3

A positive electrode active material was prepared in the same manner as in Example 1, except that during the first heat treatment, a $Ni_{0.92}Co_{0.066}Mn_{0.02}(OH)_2$ hydroxide precursor, LiOH (Li/(Ni+Co+Mn) mol ratio = 1.05) and $Al_2O_3$ (weighed and mixed to 0.5 mol% of the total mixture) were mixed while maintaining an $O_2$ atmosphere in a furnace, the temperature was raised to 700°C at 2°C per minute, and then heat-treated at 700°C for 10 hours.

Reference Example 1

A positive electrode active material was prepared in the same manner as in Example 1, except that during the second heat treatment for the lithium composite oxide, 0.1 mol% of $TiO_2$ was mixed, and then the temperature was raised to 350°C at 2°C per minute while maintaining an $O_2$ atmosphere, and then additional heat treatment (second heat treatment) was performed at 350°C for 10 hours.

Reference Example 2

A positive electrode active material was prepared in the same manner as in Example 1, except that during the second heat treatment for the lithium composite oxide, 0.8 mol% of $TiO_2$ was mixed, and then the temperature was raised to 720°C at 2°C per minute while maintaining an $O_2$ atmosphere, and then additional heat treatment (second heat treatment) was performed at 720°C for 24 hours.

**Preparation Example 2. Manufacture of lithium secondary battery**

94 wt% of each of the positive electrode active material prepared according to Preparation Example 1, 3 wt% of artificial graphite, and 3 wt% of a PVDF binder were dispersed in 3.5 g of N-methyl-2 pyrrolidone (NMP) to prepare a positive electrode slurry. The positive electrode slurry was applied on a 20 $\mu$m-thick aluminum (Al) thin film as a positive electrode current collector and dried, and then roll pressing was performed to manufacture a positive electrode. The loading level of the positive electrode was 7 mg/cm$^2$ and the electrode density was 3.2 g/cm$^3$.

According to a commonly known manufacturing process, lithium foil as a counter electrode for the positive electrode, a porous polyethylene membrane (Celgard 2300, thickness: 25 $\mu$m) as a separator, and a liquid electrolyte in which 1.15 M LiPF$_6$ was present in a mixed solvent of ethylene carbonate and ethyl methyl carbonate in a volume ratio of 3:7 were used to manufacture a coin battery.

**Experimental Example 1. SEM/EDX analysis of metal composite hydroxide and positive electrode active material**

FIGS. 2 to 8 are graphs exhibiting the content of the doping metal in the secondary particles determined by EDX analysis of a cross-sectional SEM image obtained after selecting secondary particles having a radius of 7.5 $\mu$m contained in the positive electrode active material according to Examples 1 to 7, respectively, and then performing cross-section treatment using an FIB (Ga-ion source), and FIGS. 9 to 11 are graphs exhibiting the content of doping metal in the secondary particles determined by EDX analysis, i.e., line scanning, of a cross-sectional SEM image obtained after selecting secondary particles having a radius of 7.5 $\mu$m contained in the positive electrode active material according to Comparative Examples 1 to 3, respectively, and then performing cross-section treatment using a FIB (Ga-ion source).

In addition, FIGS. 12 and 13 are graphs exhibiting the content of doping metal in the secondary particles determined by EDX analysis, i.e., line scanning, of a cross-sectional SEM image obtained after selecting secondary particles having a radius of 7.5 $\mu$m contained in the positive electrode active material according to Reference Example 1 and Reference Example 2, respectively, and then performing cross-section treatment using a FIB (Ga-ion source).

Here, FIGS. 2 to 13 are excerpts of line scanning results from the surface portion of the secondary particle included in each positive electrode active material to a depth of 3 $\mu$m (3,000 nm).

For reference, since Comparative Example 1 does not include a doping metal, the line scanning graph of FIG. 9 shows a base line. In addition, although the line scanning results for the secondary particle included in the positive electrode active material according to Example 8 are not separately attached, the secondary particles included in the positive electrode active material according to Example 8 were also found to exhibit a concentration gradient pattern similar to those of the positive electrode active materials according to Examples 1 to 7 shown in FIGS. 2 to 8.

Table 11

| Classification | Doping metal |
|---|---|
| Example 1 | Ti |
| Example 2 | Zr |
| Example 3 | V |
| Example 4 | B |
| Example 5 | w |
| Example 6 | Sr |
| Example 7 | Al |
| Example 8 | Ti |
| Comparative Example 1 | - |
| Comparative Example 2 | Zr |
| Comparative Example 3 | Al |
| Reference Example 1 | Ti |
| Reference Example 2 | Ti |

Referring to FIGS. 2 to 8, when the radius (7.5 $\mu$m) of the secondary particle is denoted by R, since it can be confirmed that the secondary particles included in the positive electrode active material according to Examples 1 to 7 are localized within a depth of 0 to 0.2 R (1.5 μm), it can be confirmed that a first concentration gradient section having a (-) slope and a second concentration gradient section having a (+) slope are repeatedly present in the concentration of the doping metal from the surface portion of the secondary particle toward the center portion of the secondary particle.

Meanwhile, referring to FIG. 10, in the secondary particle included in the positive electrode active material according to Comparative Example 2, it can be confirmed that a concentration gradient section having a (+) slope is not present from the surface portion of the secondary particle toward the center portion of the secondary particle. That is, the secondary particles included in the positive electrode active material according to Comparative Example 2 have a concentration gradient in which the concentration of the doping metal gradually decreases from the surface portion of the secondary particles toward the center portion of the secondary particles.

Referring to FIG. 11, in the secondary particles included in the positive electrode active material according to Comparative Example 3, it can be seen that the concentration of the doping metal does not significantly change and is maintained almost uniformly from the surface portion of the secondary particle toward the center portion of the secondary particle.

In addition, similar to the positive electrode active materials according to Examples 1 to 7, since it can be confirmed that the secondary particles included in the positive electrode active material according to Reference Example 1 are localized within a depth of 0 to 0.2 R (1.5 μm), it can be confirmed that a first concentration gradient section having a (-) slope and a second concentration gradient section having a (+) slope are present in the concentration of the doping metal from the surface portion of the secondary particle toward the center portion of the secondary particle. However, in the secondary particles contained in the positive electrode active material according to Reference Example 1, the first concentration gradient section and the second concentration gradient section are not repeatedly present from the surface portion of the secondary particle toward the center portion of the secondary particle.

Similar to the positive electrode active material according to Examples 1 to 7, in the secondary particles included in the positive electrode active material of Reference Example 2, a first concentration gradient section in which the concentration of the doping metal has a (-) slope and a second concentration gradient section in which the slope is (+) are repeatedly present from the surface portion of the secondary particle to the center portion thereof. However, it can be confirmed that in the secondary particles contained in the positive electrode active material according to Reference Example 2, the first concentration gradient section and the second concentration gradient section are repeatedly present even in a region exceeding a depth of 0.2R (1.5 μm) from the surface portion of the secondary particle.

**Experimental Example 2. XRD analysis of positive electrode active material**

Each positive electrode active material prepared according to Preparation Example 1 was subjected to X-ray diffraction (XRD) analysis to confirm the presence or absence of a compound other than a lithium composite oxide having a crystal structure represented by the Chemical Formula 1 in the positive electrode active material. XRD analysis was performed using a Bruker D8 Advance diffractometer using Cu Kα radiation (1.540598 Å).

FIGS. 14 to 16 show XRD analysis results of the positive electrode active materials according to Examples 1 to 3, respectively.

Referring to FIGS. 14 to 16, a peak corresponding to a crystal structure of a compound represented by $Li_gTi_hO_i/Li_gZr_hO_i/Li_gV_hO_i$ ($0 \leq g \leq 10$, $0 < h \leq 8$, $0 < i \leq 15$) was observed from the positive electrode active materials according to Examples 1 to 3.

That is, when the lithium composite oxide obtained through the first heat treatment is not washed with water, and a raw material including a dopant is mixed with the lithium composite oxide and then subjected to a second heat treatment, it can be confirmed that a raw material including a dopant and residual lithium present in a surface portion of the lithium composite oxide (secondary particle) obtained through the first heat treatment react to form a compound represented by the following Chemical Formula 2.

$$[\text{Chemical Formula 2}] \qquad Li_gM4_hO_i$$

wherein,

M4 is at least one selected from Mn, Al, Co, Ti, Zr, Sr, Mg, V, B, Mo, Zn, Nb, Ba, Ca, Ta, Fe, Cr, Sn, Hf, Ce and W; $0 \leq g \leq 10$, $0 < h \leq 8$, $0 < i \leq 15$.

**Experimental Example 3. Measurement of residual lithium and specific surface area of positive electrode active material**

Residual lithium was measured by the amount of 0.1M HCl used until pH 4 by pH titration. First, 5 g of each positive electrode active material prepared according to Preparation Example 1 was put into 100 ml of DIW, stirred for 15 minutes, and then filtered. Then, after taking 50 ml of the filtered solution, 0.1M HCl was added thereto, and the amount of HCl consumption according to the change in pH was measured to determine Q1 and Q2, and residual LiOH and $Li_2CO_3$ were calculated according to the following formulas.

$$M1 = 23.94 \ (\text{LiOH Molecular weight})$$

$$M2 = 73.89 \ (Li_2CO_3 \ \text{Molecular weight})$$

$$\text{LiOH(ppm)} = \frac{(Q1-Q2) * M1 * HCl\ con.* DIW(g)}{Solution(g)*powder(g)} * 10{,}000$$

$$Li_2CO_3\text{(ppm)} = \frac{2 * Q2 * M2 / 2 * HCl\ con.* DIW(g)}{Solution(g)*powder(g)} * 10{,}000$$

In addition, the BET specific surface area was calculated from the nitrogen gas adsorption amount under a liquid nitrogen temperature (77K) using a gas adsorption method specific surface area measuring apparatus (BELSORP-mini II by MicrotaracBEL).

The residual lithium and BET specific surface area measurement results are shown in Table 2 below.

[Table 2]

| Classification | LiOH (ppm) | $Li_2CO_3$ (ppm) | Total (ppm) | BET ($m^2$/g) |
|---|---|---|---|---|
| Example 1 | 1,317 | 3,073 | 4,390 | 0.35 |
| Example 2 | 1,118 | 4,838 | 5,956 | 0.35 |
| Example 3 | 1,340 | 4,692 | 6,032 | 0.38 |
| Example 4 | 2,327 | 4,654 | 6,981 | 0.39 |
| Example 5 | 1,023 | 3,938 | 4,961 | 0.31 |
| Example 6 | 2,912 | 4,545 | 7,457 | 0.41 |
| Example 7 | 925 | 4,838 | 5,763 | 0.45 |
| Example 8 | 1,823 | 3,771 | 5,594 | 0.36 |
| Comparative Example 1 | 1,147 | 3,649 | 4,796 | 0.35 |
| Comparative Example 2 | 6,421 | 5,948 | 12,369 | 0.44 |
| Comparative Example 3 | 1,491 | 4,011 | 5,502 | 0.36 |
| Reference Example 1 | 4,862 | 4,249 | 9,111 | 0.45 |
| Reference Example 2 | 4,132 | 4,692 | 8,824 | 0.46 |

Referring to the results of Table 2, in the case of the positive electrode active material according to Example 1, it can be seen that the content of residual lithium was decreased while not increasing the specific surface area compared to Comparative Example 1.

In addition, it can be seen that in the case of the positive electrode active material according to Comparative Example 2, which has a concentration gradient in the form in which the concentration of the doping metal gradually decreases from the surface portion of the secondary particle toward the center portion of the secondary particle, the content of residual lithium is excessively high compared with Examples 1 to 7.

Meanwhile, in the case of Reference Example 1 in which the first concentration gradient section and the second concentration gradient section for the doping metal are not repeatedly present from the surface portion of the secondary particle toward the center portion of a secondary particle, and in the case of Reference Example 2 in which, even in a region exceeding a depth of 0.2R (1.5 $\mu$m) from a surface portion thereof, the first and second concentration gradient sections are repeatedly present, it can be confirmed that the specific surface area is rather increased while the effect of reducing residual lithium is slight compared to the positive electrode active material according to Example 1.

As shown in FIG. 12, in the case of the positive electrode active material according to Reference Example 1, the effect of reducing residual lithium in a region near the center portion of the secondary particle is expected to be insufficient as compared with Example 1 as the first concentration gradient section and the second concentration gradient section are not repeatedly present from the surface portion of the secondary particle toward the center portion thereof. In the case of the positive electrode active material according to Reference Example 2, the number of repetitions of the first concentration gradient section and the second concentration gradient region was increased from the surface portion of the secondary particle toward the center portion of the secondary particle due to the heat treatment maintained for a relatively long time, but it is expected that lithium was eluted again in the form of an impurity from the lithium composite oxide to increase the content of residual lithium.

**Experimental Example 4. Evaluation of lithium secondary battery capacity and lifespan characteristics**

A charging and discharging experiment was carried out at 25°C by applying a voltage range 3.0V to 4.3V, and a discharge rate of 0.1 C using an electrochemical analyzer (Toyo, Toscat-3100) for the lithium secondary battery (coin cell) manufactured in Preparation Example 2 to measure the charging and discharging capacity

In addition, the same lithium secondary battery was charged/discharged 50 times under the condition of 1 C/1 C in a driving voltage range of 3.0 V to 4.4 V at 25°C, and then the ratio of the discharge capacity at the 50th cycle to the initial capacity (cycle capacity retention rate) was measured.

The measurement results are shown in Table 3 below.

[Table 3]

| Classification | Charging capacity (mAh/g) | Discharging capacity (mAh/g) | Charging/dischar ging efficiency (%) | Retention@50cy (%) |
|---|---|---|---|---|
| Example 1 | 240.1 | 14. | 87.4 | 87.9 |
| Example 2 | 239.7 | 14. | 87.6 | 90.7 |
| Example 3 | 239.8 | 210.3 | 87.7 | 89.5 |
| Example 4 | 241.5 | 214.7 | 88.9 | 88.3 |
| Example 5 | 244.7 | 212.2 | 86.7 | 93.2 |
| Example 6 | 241.8 | 208.7 | 86.3 | 89.2 |
| Example 7 | 239.1 | 211.4 | 88.4 | 91.0 |
| Example 8 | 243.5 | 14. | 86.1 | 88.2 |
| Comparative Example 1 | 237.7 | 204.2 | 85.9 | 80.2 |
| Comparative Example 2 | 227.1 | 189.2 | 83.3 | 82.4 |
| Comparative Example 3 | 238.3 | 204.5 | 85.5 | 83.4 |
| Reference Example 1 | 232.4 | 197.8 | 85.1 | 79.9 |
| Reference Example 2 | 233.4 | 200.3 | 85.8 | 81.4 |

Referring to the results of Table 3, it can be confirmed that the charging and discharging efficiency and the cycle capacity retention ratio of the lithium secondary battery using the positive electrode active materials according to Examples 1 to 8 are improved as compared with Comparative Example 1 in which there is no concentration gradient of the doping metal in the secondary particles.

In addition, in the case of Comparative Example 2 having a concentration gradient in a form in which the concentration of the doping metal gradually decreases from the surface portion of the secondary particle toward the center portion of a secondary particle, it was confirmed that the cycle capacity retention rate was improved to a small extent as compared with Comparative Example 1, but rather the charging and discharging efficiency was reduced.

Additionally, it can be confirmed that in the case of Reference Examples 1 and 2 in which the first concentration gradient section and the second concentration gradient section for the doping metal are not repeatedly present from the surface portion of the secondary particle toward the center portion of the secondary particle (that is, at least two peaks (p1, p2) are not present after the first peak (p0) with respect to the concentration of the doping metal appearing at a position corresponding to the outermost surface of the secondary particle), or in which a peak due to the first concentration gradient section and the second concentration gradient sections are present even in a region close to the center portion of the secondary particle as the first and the second concentration gradient section are excessively repeated, the effect of improving the charging and discharging efficiency and/or the cycle capacity retention ratio is slight as compared with Comparative Example 1.

While the embodiments of the present invention have been described above, it will be understood by those skilled in the art that various changes and modifications of the present invention may be made by addition, alteration, deletion, addition, or the like of the components without departing from the spirit of the present invention as set forth in the claims, and such modifications are also intended to be included within the scope of the present invention.

**Claims**

1.  A positive electrode active material including at least nickel, cobalt, and a doping metal and including a lithium composite oxide having a layered structure capable of intercalation/deintercalation of lithium,

    the lithium composite oxide includes secondary particles, which are aggregates in which a plurality of primary particles are aggregated and a grain boundary is formed between adjacent primary particles, and
    the secondary particles are aggregates of primary particles exhibiting a concentration gradient in which the concentration of the doping metal has a (-) slope from the grain boundary between the primary particles toward the center portion of the primary particle.

2.  The positive electrode active material of claim 1, wherein the primary particles are represented by the following Chemical Formula 1:

    [Chemical Formula 1]        $Li_aNi_{1-(b+c+d+e)}Co_bM1_cM2_dM3_eO_f$

    wherein,

    M1 is at least one selected from Mn and Al,
    M2 and M3 are each independently selected from Al, Ba, B, Ce, Cr, Mg, Mn, Mo, Na, K, P, V, Sr, Ti, W, Nb and Zr,
    M1 to M3 are different from each other,
    and $0.90 \leq a \leq 1.15$, $0 \leq b \leq 0.15$, $0 \leq c \leq 0.10$, $0 \leq d \leq 0.025$, $0 \leq e \leq 0.025$, $1.0 \leq f \leq 2.0$.

3.  The positive electrode active material of claim 2, wherein concentrations (mol%) of Ni, Co, M1, M2 and M3 in the primary particle represented by Chemical Formula 1 satisfy Equation 2 below:

$$[Equation\ 2]$$
$$Co/(Ni+Co+M1+M2+M3) \leq 5.0.$$

4.  The positive electrode active material of claim 2, wherein the secondary particles are aggregates of primary particles exhibiting a concentration gradient in which at least one concentration selected from M2 and M3 decreases from the grain boundary between the primary particles toward the center portion of the primary particle.

5.  The positive electrode active material of claim 1, wherein a first concentration gradient section having a (-) slope and a second concentration gradient section having a (+) slope are present in the concentration of the doping metal from the surface portion of the secondary particle toward the center portion of the secondary particle.

6.  The positive electrode active material of claim 5, wherein the first concentration gradient section and the second concentration gradient section are repeatedly present at least twice from the surface portion of the secondary particle toward the center portion of the secondary particle.

7. The positive electrode active material of claim 5, wherein a concentration maintenance section in which the absolute value of the concentration change amount of the doping metal is 3 at% or less is present between the first concentration gradient section and the second concentration gradient section.

8. The positive electrode active material of claim 1, wherein a compound represented by the following Chemical Formula 2 is present on at least a portion of a grain boundary between the primary particles and a surface of the secondary particle:

[Chemical Formula 2] $Li_gM4_hO_i$

wherein,

M4 is at least one selected from Mn, Al, Co, Ti, Zr, Sr, Mg, V, B, Mo, Zn, Nb, Ba, Ca, Ta, Fe, Cr, Sn, Hf, Ce and W; and $0 \leq g \leq 10$, $0 < h \leq 8$, $0 < i \leq 15$.

9. The positive electrode active material of claim 1, wherein at least one compound selected from $Li_2B_4O_7$, $Li_3BO_3$, $Li_1B_2O_7$, $Li_2B_8O_{13}$, $Li_2V3$, $Li_3VO_4$, $Li_6Zr_3O_9$, $Li_2ZrO_3$, $Li_{5.5}Zr_{2.6}2O_8$, $Li_{44}Ba_{19}$, $Li_4Ba$, $Li_2TiO_3$, $LiTi_7O_4$, and $LiTi_2O_4$ are present on at least a portion of the grain boundary between the primary particles and the surface of the secondary particle.

10. The positive electrode active material of claim 1, wherein the primary particle has an average particle diameter of 0.1 $\mu$m to 10.0 $\mu$m.

11. The positive electrode active material of claim 10, wherein when the average particle diameter of the primary particle is r, the concentration gradient in the primary particle is present within a depth of 0 to 0.2r from a grain boundary between the primary particles.

12. The positive electrode active material of claim 1, wherein the secondary particle has an average particle diameter of 3 $\mu$m to 20 $\mu$m.

13. The positive electrode active material of claim 12, wherein when the radius of the secondary particle is R, the first concentration gradient section having a (-) slope and a second concentration gradient section having a (+) slope are present in the concentration of the doping metal within a depth of 0 to 0.2R from the surface portion of the secondary particle.

14. A positive electrode including the positive electrode active material of claim 1.

15. A lithium secondary battery using the positive electrode of claim 14.

FIG. 1

FIG. 2

Diatance, nm

FIG. 3

Diatance, nm

FIG. 4

Diatance, nm

FIG. 5

Diatance, nm

FIG. 6

FIG. 7

FIG. 8

FIG. 9

FIG. 10

FIG. 11

FIG. 12

FIG. 13

FIG. 14

FIG. 15

FIG. 16

Europäisches
Patentamt

European
Patent Office

Office européen
des brevets

# EUROPEAN SEARCH REPORT

Application Number

EP 22 19 9854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 654 585 A (HITACHI METALS LTD) 13 April 2021 (2021-04-13) * claim 1; examples 1,9-12 * | 1-9, 11-15 | INV. C01G53/00 H01M4/131 H01M4/525 |
| X | EP 3 828 138 A1 (ECOPRO BM CO LTD [KR]) 2 June 2021 (2021-06-02) <br><br> * paragraphs [0030], [0115] - [0119], [0129], [0142]; claims 1,5; example 1; table 3 * | 1-6,8, 10,11, 13-15 | H01M4/36 H01M4/485 H01M4/58 |

TECHNICAL FIELDS
SEARCHED      (IPC)

C01G
H01M

The present search report has been drawn up for all claims

| Place of search | Date of completion of the search | Examiner |
|---|---|---|
| Munich | 1 March 2023 | Redecker, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 9854

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2023

| Patent document cited in search report | | Publication date | Patent family member(s) | | Publication date |
|---|---|---|---|---|---|
| CN 112654585 | A | 13-04-2021 | CN 112654585 A | | 13-04-2021 |
| | | | EP 3950599 A1 | | 09-02-2022 |
| | | | JP 6986211 B2 | | 22-12-2021 |
| | | | JP WO2020195790 A1 | | 20-05-2021 |
| | | | KR 20210035300 A | | 31-03-2021 |
| | | | US 2022115656 A1 | | 14-04-2022 |
| | | | WO 2020195790 A1 | | 01-10-2020 |
| EP 3828138 | A1 | 02-06-2021 | CN 112885991 A | | 01-06-2021 |
| | | | EP 3828138 A1 | | 02-06-2021 |
| | | | JP 7100102 B2 | | 12-07-2022 |
| | | | JP 2021084856 A | | 03-06-2021 |
| | | | JP 2022141690 A | | 29-09-2022 |
| | | | KR 20220156506 A | | 25-11-2022 |
| | | | US 2021167381 A1 | | 03-06-2021 |

EPO FORM P0459

For more details about this annex : see Official Journal of the European Patent Office, No. 12/82

**REFERENCES CITED IN THE DESCRIPTION**

**Patent documents cited in the description**

- KR 1020140022681